# FASCICULE DE BREVET EUROPEEN

(11) **EP 3 802 077 B1**
(45) Date de publication et mention de la délivrance du brevet: **06.08.2025**
(21) Numéro de dépôt: 19731800.9
(22) Date de dépôt: 04.06.2019
(51) Int. Cl.: B29C 70/56, B29C 70/54, B29D 28/00, B33Y 80/00, B29C 70/24, B29C 70/22, B29C 70/34

(54) **PROCEDE DE FABRICATION D'UNE PIECE EN MATERIAU COMPOSITE**
VERFAHREN ZUR HERSTELLUNG EINES AUS EINEM VERBUNDSTOFFMATERIAL GEFERTIGTEN TEILS
METHOD FOR MANUFACTURING A PART MADE FROM COMPOSITE MATERIAL

(30) Priorité: 04.06.2018 FR 1854830; 04.06.2018 FR 1854836
(43) Date de publication de la demande: 14.04.2021
(73) Titulaire: Conseil et Technique, 31570 Sainte Foy d'Aigrefeuille (FR)
(72) Inventeur: VALEMBOIS, Guy, 31650 Lauzerville (FR); FISCHER, Nicolas-Jean, 45200 Montargis (FR); FLORENTZ, Bertrand, 45200 Paucourt (FR)
(74) Mandataire: Gevers & Orès
(86) Numéro de dépôt international: PCT/IB2019/054635
(87) Numéro de publication internationale: WO 2019/234625

(56) Documents cités:
- WO-A1-97/02131
- DE-A1- 102008 027 315
- GB-A- 2 082 541
- US-A- 4 460 531

## Description

La présente invention a pour objet un procédé de fabrication d'une pièce en matériau composite comprenant une matrice thermoplastique ou thermodurcissable renforcée de fibres.

On notera que par fibres on entend toutes les formes sous lesquelles peuvent être présentées les fibres de renfort, et notamment, mais non limitativement, des mèches ou cordons de fibres de renfort.

La matrice thermoplastique ou thermodurcissable d'une pièce en matériau composite, dans laquelle sont noyées les fibres de renfort constitue le point faible, et qui consiste généralement en une résine, de ladite pièce car elle présente une résistance spécifique très inférieure à celle des fibres. Le mode de ruine d'une pièce en composite est généralement une rupture de la résine liant les fibres.

Par conséquent la bonne conception d'une pièce composite prend en compte ce phénomène et privilégie une transmission des efforts par la mise en traction ou en compression pure des fibres, ce qui a pour effet de ne pas solliciter la résine. Par conséquent, lors de la conception et de la fabrication de pièces en matériau composite, on cherche à orienter les fibres dans la direction des efforts ou dans des directions proches.

Par ailleurs, pour optimiser la tenue mécanique de la pièce à réaliser, il est également nécessaire d'éviter que les fibres soient plissées ou non rectilignes, et on cherche donc à atteindre une parfaite rectitude des fibres.

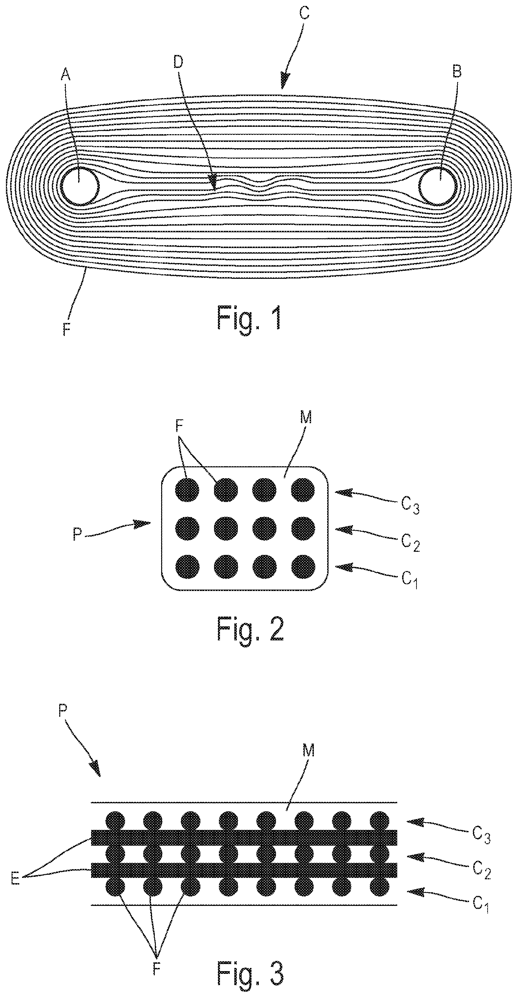

Cette rectitude est généralement obtenue par la mise en tension de la fibre, en étant par exemple tendue entre deux moyens de renvoi. C'est ainsi que, de manière courante, on réalise un enroulement de fibres pré-imprégnées autour de deux axes distants, pour réaliser un écheveau, tel que cela est représenté sur la figure 1.

Toutefois, si les fibres demeurent parfaitement rectilignes après quelques enroulements, il n'en est pas de même après un grand nombre d'enroulements, car on observe un foisonnement des fibres qui conduit à une augmentation d'épaisseur au niveau des axes, un gonflement transversal dans la partie médiane, et un comblement de l'espace entre les axes, associé à un plissement des fibres dans cette zone, en sorte que les fibres ne sont plus rectilignes.

On sait, par le document GB 2082541, faire un panneau composite comprenant des fibres de renfort, lesquelles sont enroulées autour de points de fixation disposés sur un gabarit, en outre certaines de ces fibres passent alternativement en-dessous puis au-dessus de barres transversales qui assurent la tension et le volume en épaisseur du panneau à fabriquer. Si les barres transversales permettent de mettre en tension les fibres, cette tension ne permet pas une parfaite rectitude des fibres puisque celles-ci sont également enroulées plusieurs fois sur les points de fixation du gabarit, comme pour l'écheveau de la figure 1.

L'un des buts de la présente invention est de proposer un procédé de fabrication d'une pièce en matériau composite, comprenant une matrice thermoplastique ou thermodurcissable renforcée de fibres, qui permet de pallier les inconvénients précités, en optimisant l'orientation et surtout la mise en rectitude des fibres au sein de ladite pièce.

Un autre but de la présente invention est de proposer un procédé qui soit automatisable, sachant que la réalisation de pièce en matériau composite nécessite encore de trop nombreuses interventions humaines, ce qui est préjudiciable économiquement.

Le procédé de fabrication d'une pièce en matériau composite selon la revendication 1 est selon l'invention.

On notera que le terme rigidifier est utilisé de manière générale, ce peut être par exemple, non limitativement, une polymérisation, un refroidissement pour les mèches ou fils thermoplastiques déposés par refusion, l'évaporation du solvant d'une colle déposée en spray, la pulvérisation d'eau sur les fibres pour faire migrer l'ensimage des fibres aux croisement de fibres et créer une légère cohésion d'ensemble.

Chacune des fibres est ainsi maintenue parfaitement droite, sans incidence de la mise en tension des fibres voisines.

On sait que dans les constructions ne travaillant qu'en traction/compression, c'est toujours la compression qui pose problème en premier, à cause du flambement. La façon d'écarter les fibres, selon l'invention, permet d'augmenter leur résistance au flambement en compression par augmentation de l'inertie des « poutres élémentaires » obtenues dans une telle structure treillis.

On notera que de manière avantageuse, les éléments de renvoi peuvent être internes à la pièce en matériau composite, et qu'ils peuvent donc être destinés à être noyés dans la matrice.

Selon une caractéristique additionnelle du procédé selon l'invention, on réalise un tour mort d'écartement autour des éléments de renvoi, afin de reparalléliser les fibres.

Un tour mort consiste en un tour complet autour d'un élément de renvoi, plutôt qu'une simple boucle.

Selon une autre caractéristique additionnelle du procédé selon l'invention, on réalise l'espacement entre les différentes couches en y intercalant des éléments.

Selon un autre mode de réalisation particulier du procédé selon l'invention, les éléments intercalés consistent en des espaceurs déposés de manière robotisée.

Selon un autre mode de réalisation particulier du procédé selon l'invention, les éléments intercalés consistent en des espaceurs déposés par un procédé de fabrication additive.

Selon un autre mode de réalisation particulier on superpose les couches en maintenant entre elles un écartement par rapport à la voisine au moyen d'espaceurs obtenus par un procédé de fabrication additive.

Selon un mode de réalisation particulier du procédé selon l'invention, on superpose les couches en maintenant entre elles un écartement par rapport à la voisine, en intercalant une couche de fibres alignées et juxtaposées, s'étendant dans une direction différente de celle de la ou des couches avec la ou lesquelles elle est en contact.

Selon une autre caractéristique additionnelle du procédé selon l'invention, on réalise le soudage des fibres qui se croisent au moyen d'une seconde résine.

Ce soudage, par le dépôt de cette seconde résine, en une opération, non limitativement de moulage, coulée, trempage, permet d'augmenter la résistance au flambement des mèches constitutives du treillis réalisé.

Selon une autre caractéristique additionnelle du procédé selon l'invention, les fibres sont préalablement recouvertes individuellement d'une matière thermoplastique ou thermodurcissable en sorte de former une gaine dont l'épaisseur est apte à la réalisation de l'écartement entre les fibres juxtaposées et/ou superposées.

Selon une variante du procédé selon l'invention, plusieurs fibres maintenues parallèles et écartées deux à deux sont recouvertes d'une matière thermoplastique ou thermodurcissable en sorte de former une gaine dont l'épaisseur est apte à la réalisation de l'écartement entre les fibres juxtaposées et/ou superposées.

Les avantages et les caractéristiques du procédé de fabrication d'une pièce en matériau composite selon l'invention, ressortiront plus clairement de la description qui suit et qui se rapporte au dessin annexé, lequel en représente un mode de réalisation non limitatif.

Dans le dessin annexé :
- la figure 1 représente une vue schématique d'un enroulement filamentaire illustrant l'état de la technique,
- la figure 2 représente une vue schématique d'une coupe transversale d'une partie d'une pièce en matériau composite réalisée au travers du procédé de fabrication selon l'invention,
- la figure 3 représente une vue schématique d'une variante du même procédé de fabrication,
- la figure 4 représente une vue schématique d'une autre variante du même procédé de fabrication,
- la figure 5 représente la même vue schématique d'une pièce en matériau composite réalisée selon une variante du même procédé,
- la figure 6 représente une vue en perspective d'une étape du même procédé lors de la fabrication d'une pièce en matériau composite.

La figure 1 illustre une étape d'un procédé habituel de fabrication d'une pièce en matériau composite. Ainsi, le procédé consiste à réaliser un écheveau E par enroulement de fibres pré-imprégnées F sur deux axes A et B. Si théoriquement les fibres sont tendues entre les deux axes, en réalité on constate une augmentation d'épaisseur au niveau des axes A et B, et surtout un gonflement transversal dans la partie médiane C et un comblement de l'espace D entre les axes A et B, associé à un plissement des fibres F dans cette zone. Par conséquent, un tel procédé ne permet pas d'atteindre le but recherché à savoir que les fibres F soient rectilignes, afin de pouvoir être sollicitées non seulement en traction mais également en compression.

Comme déjà évoqué, on entend par fibres toutes les formes sous lesquelles peuvent être présentées les fibres de renfort, et notamment, mais non limitativement, des mèches ou cordons de fibres de renfort.

En référence maintenant à la figure 2, on peut voir une coupe transversale d'une partie d'une pièce P réalisée par le procédé selon l'invention.

Cette pièce P comporte une matrice M dans laquelle sont noyées des fibres de renfort F. Le procédé selon l'invention consiste à arranger les fibres F en sorte qu'elles soient maintenues alignées, parallèles entre elles et surtout parfaitement rectilignes.

Pour atteindre ce but, les fibres sont alignées et juxtaposées pour former une couche, elle-même recouverte d'une autre couche.

On notera que les termes « couche » et « superposition » ne sont pas limitatifs, ils n'impliquent pas une orientation obligatoire, ils sont utilisés pour simplifier la compréhension.

Sur la figure 2, la partie de pièce composite représentée comporte trois couches superposées, C1, C2 et C3 de quatre fibres F chacune.

La couche C1 est obtenue en tendant quatre fibres F entre des moyens de renvoi, non représentés, tout en les maintenant espacées les unes des autres.

La couche C2 est réalisée au-dessus de la couche C1, à distance de celle-ci, et de la même manière, à savoir par tension des fibres F entre des moyens de renvoi, et il en est de même pour la couche C3.

Selon ce mode de réalisation l'espacement de deux couches successives est obtenu par l'intermédiaire de moyens de renvoi spécifiques à chaque couche.

Après la construction d'une telle structure de fibres F, elle est noyée dans la matrice M, par l'intermédiaire de différents moyens connus, tels que, non limitativement, trempage, moulage, coulée, infusion, pulvérisation.

En référence maintenant à la figure 3, on peut voir que selon une variante du procédé selon l'invention, le maintien de l'écartement entre deux couches successives peut être réalisé non pas au travers de moyens de renvoi spécifiques à chaque couche, mais par dépôt entre chacune d'elles d'éléments d'espacement E.

Les moyens d'espacement E peuvent être de différentes natures, ils peuvent consister, non limitativement, en des fibres disposées dans une direction différente de celles des couches C1, C2 et C3, ou bien de la résine, identique à celle composant la matrice M.

On notera que dans un but d'automatisation du procédé de fabrication selon l'invention, les éléments d'espacement E peuvent être avantageusement déposés entre chaque couche par un procédé de fabrication additive.

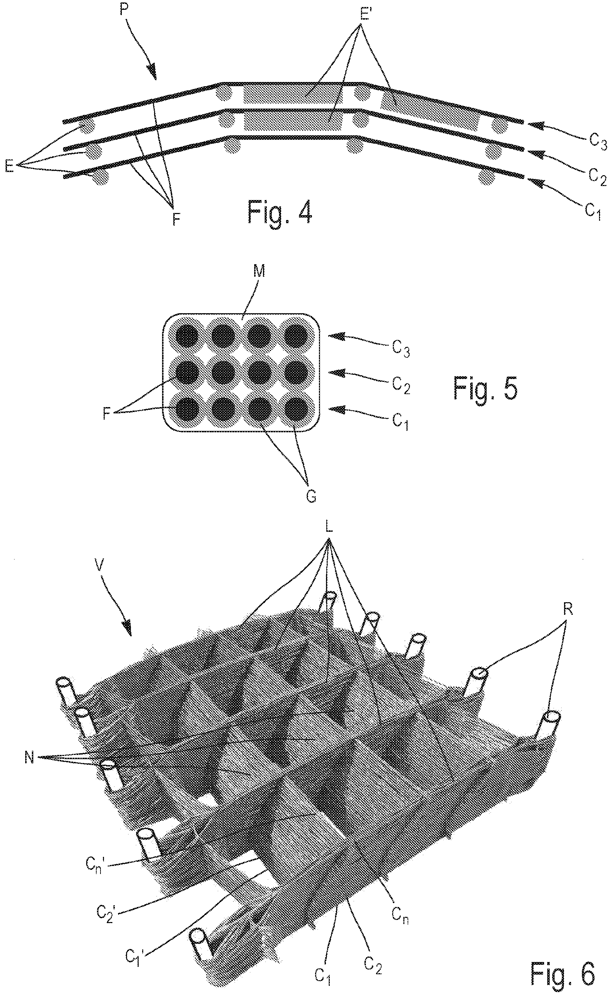

En référence à la figure 4, on peut voir une autre variante de mise en œuvre du procédé selon l'invention, dans laquelle le positionnement particulier des éléments d'espacement E supportant une même couche C1, C2 ou C3, de fibres F, autorise une mise en forme de chacune de ces couches C1, C2 ou C3, en sorte de leur donner par exemple une forme incurvée.

Dans le mode de réalisation représenté, on notera que les éléments d'espacement E peuvent consister en des fibres, tandis que d'autres éléments d'espacement E' sont disposés à la fois entre les couches C1, C2 ou C3, et entre les éléments d'espacement E.

La figure 5 montre une autre variante de mise en œuvre du procédé selon l'invention. Dans cette variante, on utilise des fibres F, ou plus particulièrement des mèches, enrobées d'une matière thermoplastique ou thermodurcissable de manière à former autour de chacune d'elles une gaine G d'une épaisseur choisie.

Lors de la réalisation des couches C1, C2 et C3, les gaines G permettent de maintenir l'écartement entre les fibres F d'une même couche, mais également entre les fibres de deux couches successives.

Selon cette variante, le maintien de l'espacement entre les fibres étant obtenu par les gaines G, il reste alors uniquement à assurer la tension des fibres.

Il est également possible de prévoir plusieurs fibres disposées parallèlement et régulièrement espacées deux-à-deux, l'ensemble étant entouré d'une seule gaine formant des moyens d'espacement.

La figure 6 représente la structure en fibres F d'une pièce V en matériau composite, avant l'opération d'association de la matrice M.

La fabrication de cette pièce V est à rapprocher du procédé illustré à la figure 4.

La pièce V est constituée de l'entrecroisement de parois parallèles L et N, où les parois L sont plates, tandis que les parois N sont incurvées autour d'un axe longitudinal perpendiculaire aux parois L.

Les parois L sont constituées de la superposition de couches C1, C2 .... Cn, constituées chacune de fibres F juxtaposées, maintenues écartées les unes des autres au travers de leur tension sur des moyens de renvoi R, en l'occurrence des broches, tandis qu'entre chaque couche C1, C2 .... Cn est intercalée une couche, C'1, C'2 .... C'n de fibres F, espacées les unes des autres, tendues sur des moyens de renvoi non représentés, permettant de réaliser, au travers un décalage progressif, la mise en forme incurvée des parois N.

Quel que soit le mode de mise en œuvre du procédé selon l'invention, le but recherché est atteint, à savoir la rectitude des fibres, ce qui permet une résistance optimale à la traction comme en compression.

D'autre part, le procédé selon l'invention est parfaitement automatisable, ce qui constitue un autre but de l'invention.

## Revendications

1. Procédé de fabrication d'une pièce en matériau composite, comprenant une matrice (M) thermoplastique ou thermodurcissable renforcée de fibres (F), et dans lequel lesdites fibres sont enroulées entre des éléments de renvoi et mises en tension, le procédé consistant à réaliser préalablement une structure de fibres, pré-imprégnées ou non, au travers des opérations suivantes :
- aligner, juxtaposer et maintenir écartées les fibres (F) les unes des autres, tout en les tendant entre des éléments de renvoi (R), en sorte d'obtenir une première couche (C1),
- superposer au-dessus de ladite première couche (C1) une deuxième couche (C2) obtenue de manière identique à la première, où les fibres (F) de la deuxième couche (C2) sont parallèles à celles de la première couche (C1), et maintenues écartées de celle-ci,
- répéter l'opération de superposition jusqu'à obtenir l'épaisseur souhaitée,
- rigidifier la matière constituant la matrice (M), par un procédé propre à sa nature.

2. Procédé de fabrication selon la revendication 1, **caractérisé en ce qu'**on réalise un tour complet autour de chaque élément de renvoi (R), plutôt qu'une simple boucle, afin de reparalléliser les fibres (F).

3. Procédé de fabrication selon la revendication 1 ou la revendication 2, **caractérisé en ce qu'**on réalise l'espacement entre les différentes couches en y intercalant des éléments (E, E').

4. Procédé de fabrication selon la revendication 3, **caractérisé en ce que** les éléments intercalés consistent en des espaceurs déposés de manière robotisée.

5. Procédé de fabrication selon la revendication 3 ou 4, **caractérisé en ce que** les éléments intercalés consistent en des espaceurs déposés par un procédé de fabrication additive.

6. Procédé de fabrication selon l'une quelconque de revendications 1 à 5 **caractérisé en ce qu'**on superpose les couches en maintenant entre elles un écartement par rapport à la voisine au moyen d'espaceurs obtenus par un procédé de fabrication additive.

7. Procédé de fabrication l'une quelconque de revendications 1 à 5, **caractérisé en ce qu'**on superpose les couches en maintenant entre elles un écartement par rapport à la voisine, en intercalant une couche de fibres alignées et juxtaposées, s'étendant dans une direction différente de celle de la ou des couches avec la ou lesquelles elle est en contact.

8. Procédé de fabrication selon la revendication 7, **caractérisé en ce qu'**on réalise le soudage des fibres qui se croisent au moyen d'une seconde résine.

9. Procédé de fabrication selon la revendication 1, **caractérisé en ce que** les fibres sont préalablement recouvertes individuellement d'une matière thermoplastique ou thermodurcissable en sorte de former une gaine dont l'épaisseur est apte à la réalisation de l'écartement entre les fibres juxtaposées et/ou superposées.

10. Procédé de fabrication selon la revendication 1, **caractérisé en ce que** les fibres sont arrangées à plusieurs, maintenues parallèles et écartées deux à deux et recouvertes d'une matière thermoplastique ou thermodurcissable en sorte de former une gaine dont l'épaisseur est apte à la réalisation de l'écartement entre les fibres juxtaposées et/ou superposées.

## Patentansprüche

1. Herstellungsverfahren eines Werkstücks aus Verbundmaterial, umfassend eine mit Fasern (F) verstärkte thermoplastische oder wärmehärtbare Matrix (M), und wobei die Fasern zwischen Umlenkelementen gewickelt und gespannt werden, wobei das Verfahren aus dem zuvorigen Fertigen einer Struktur aus Fasern, vorimprägniert oder nicht, durch die folgenden Vorgänge besteht:
- Ausrichten, Nebeneinanderstellen und Beabstandethalten der Fasern (F) voneinander, während sie zwischen Umlenkelementen (R) gespannt werden, derart, um eine erste Schicht (C1) zu erhalten,
- Überlagern, über die erste Schicht (C1), einer zweiten Schicht (C2), die auf zu der ersten identische Weise erhalten wurde, wobei die Fasern (F) der zweiten Schicht (C2) parallel zu jenen der ersten Schicht (C1) sind, und von diesen beabstandet gehalten werden,
- Wiederholen des Vorgangs der Überlagerung, bis die gewünschte Dicke erhalten wird,
- Versteifen des Materials, das die Matrix (M) ausmacht, durch ein für seine Natur geeignetes Verfahren.

2. Herstellungsverfahren nach Anspruch 1, **dadurch gekennzeichnet, dass** anstelle einer einfachen Schleife eine vollständige Runde um jedes Umlenkelement (R) herum durchgeführt wird, um die Fasern (F) neu zu parallelisieren.

3. Herstellungsverfahren nach Anspruch 1 oder Anspruch 2, **dadurch gekennzeichnet, dass** die Beabstandung zwischen den unterschiedlichen Schichten durchgeführt wird, indem Elemente (E, E') interkaliert werden.

4. Herstellungsverfahren nach Anspruch 3, **dadurch gekennzeichnet, dass** die interkalierten Elemente aus auf robotisierte Weise eingebrachten Abstandshaltern bestehen.

5. Herstellungsverfahren nach Anspruch 3 oder 4, **dadurch gekennzeichnet, dass** die interkalierten Elemente aus durch ein Verfahren zur additiven Fertigung eingebrachten Abstandshaltern bestehen.

6. Herstellungsverfahren nach einem der Ansprüche 1 bis 5, **dadurch gekennzeichnet, dass** die Schichten überlagert werden, indem zwischen ihnen mittels aus einem Verfahren zur additiven Fertigung erhaltenen Abstandshaltern eine Beabstandung in Bezug auf die benachbarte aufrechterhalten wird.

7. Herstellungsverfahren nach einem der Ansprüche 1 bis 5, **dadurch gekennzeichnet, dass** die Schichten überlagert werden, indem zwischen ihnen eine Beabstandung in Bezug auf die benachbarte aufrechterhalten wird, indem eine Schicht von ausgerichteten und nebeneinandergestellten Fasern interkaliert wird, die sich in einer Richtung erstreckt, die von jener der Schicht(en), die sie berührt, unterschiedlich ist.

8. Herstellungsverfahren nach Anspruch 7, **dadurch gekennzeichnet, dass** die Verschweißung von sich kreuzenden Fasern mittels eines zweiten Harzes durchgeführt wird.

9. Herstellungsverfahren nach Anspruch 1, **dadurch gekennzeichnet, dass** die Fasern zuvor individuell mit einem thermoplastischen oder wärmehärtbaren Material derart beschichtet werden, um einen Mantel zu bilden, von dem die Dicke fähig ist zur Verwirklichung der Beabstandung zwischen den nebeneinandergelegten und/oder überlagerten Fasern.

10. Herstellungsverfahren nach Anspruch 1, **dadurch gekennzeichnet, dass** die Fasern zu mehreren angeordnet, paarweise parallel und beabstandet gehalten werden und mit einem thermoplastischen oder wärmehärtbaren Material derart beschichtet werden, um einen Mantel zu bilden, von dem die Dicke fähig ist zur Verwirklichung der Beabstandung zwischen den nebeneinandergelegten und/oder überlagerten Fasern.

## Claims

1. A method for manufacturing a part made of composite material, comprising a thermoplastic or thermosetting matrix (M) reinforced with fibers (F), and in which said fibers are wound between return elements and tensioned, the method consisting in previously producing a structure of fibers, whether or not pre-impregnated, by means of the following operations:
- aligning, juxtaposing and keeping the fibers (F) spaced apart from each other, while stretching them between return elements (R), so as to obtain a first layer (C1),
- superimposing on said first layer (C1), a second layer (C2) obtained in a manner identical to the first one, where the fibers (F) of the second layer (C2) are parallel to those of the first layer (C1), and kept apart from the latter,
- repeating the superposition operation until the desired thickness is obtained,
- stiffening the material constituting the matrix (M), by means of a method specific to its nature.

2. The manufacturing method according to claim 1, wherein a full turn around each return element (R) is performed, rather than a simple loop, in order to re-parallelize the fibers (F).

3. The manufacturing method according to claim 1 or claim 2, wherein the distance between the different layers is created by interposing elements (E, E') therein.

4. The manufacturing method according to claim 3, wherein the interposed elements consist of spacers deposited in a robotic manner.

5. The manufacturing method according to claim 3 or 4, wherein the interposed elements consist of spacers deposited by means of an additive manufacturing method.

6. The manufacturing method according to any one of claims 1 to 5, wherein the layers are superimposed by maintaining a distance between them with respect to the neighboring one by means of spacers obtained through an additive manufacturing method.

7. The manufacturing method according to any one of claims 1 to 5, wherein the layers are superimposed by keeping between them a distance with respect to the neighboring one, by interposing a layer of aligned and juxtaposed fibers, extending in a direction different from that of the layer or layers, which it is into contact with.

8. The manufacturing method according to claim 7, wherein the welding of the intersecting fibers is carried out by means of a second resin.

9. The manufacturing method according to claim 1, wherein the fibers are previously covered individually with a thermoplastic or thermosetting material so as to form a sheath the thickness of which is capable of creating the distance between the juxtaposed and/or superimposed fibers.

10. The manufacturing method according to claim 1, wherein the fibers are arranged several together, kept parallel and spaced apart two by two and covered with a thermoplastic or thermosetting material so as to form a sheath the thickness of which is capable of creating the distance between the juxtaposed and/or superimposed fibers.
